# EUROPEAN PATENT SPECIFICATION

(11) **EP 3 912 783 B1**
(45) Date of publication and mention of the grant of the patent: **21.12.2022**
(21) Application number: 19916514.3
(22) Date of filing: 20.02.2019
(51) Int. Cl.: B29C 33/02, B29C 35/02, B29D 30/00, B29D 30/06, B29C 33/20

(54) **MOLD CONTAINER DEVICE AND TIRE VULCANIZER**
FORMBEHÄLTERVORRICHTUNG UND REIFENVULKANISIERER
DISPOSITIF DE RÉCIPIENT DE MOULE ET APPAREIL DE VULCANISATION DE PNEU

(43) Date of publication of application: 24.11.2021
(73) Proprietor: Mitsubishi Heavy Industries Machinery Systems, Ltd., Hyogo-ku, Kobe-shi Hyogo 652-8585 (JP); Bridgestone Corporation, Tokyo 104-8340 (JP)
(72) Inventor: IWAMOTO, Tomoyuki, Kobe-shi, Hyogo 652-8585 (JP); FUKUDA, Hideki, Kobe-shi, Hyogo 652-8585 (JP); HINENO, Yoshikatsu, Kobe-shi, Hyogo 652-8585 (JP); OKUDOMI, Naoto, Tokyo 104-8340 (JP); WAKEBE, Yu, Tokyo 104-8340 (JP); TAKENAKA, Taishi, Tokyo 104-8340 (JP)
(74) Representative: Cabinet Beau de Loménie
(86) International application number: PCT/JP2019/006231
(87) International publication number: WO 2020/170347

(56) References cited:
- JP-A- S4 971 068
- JP-A- 2000 084 935
- JP-A- 2000 084 936
- JP-A- 2006 312 251
- JP-A- 2018 202 787
- JP-B1- S4 627 051
- SU-A1- 1 080 996
- US-A- 3 989 791
- US-A1- 2012 263 813

## Description

### [Technical Field]

The present invention relates to a mold container device and a tire vulcanizer.

### [Background Art]

Patent Document 1 and Patent Document 2 disclose a mold container device used for a tire vulcanization device. The mold container device disclosed in Patent Document 1 and Patent Document 2 includes a top plate that holds an upper sidewall mold, a lower plate that holds a lower sidewall mold, a segment that holds a tread mold, and an outer ring that holds the segment and moves the segment in a radial direction of a tire.

The mold container device disclosed in Patent Document 1 and Patent Document 2 is a self-locking container. The segment of the mold container device is sandwiched by a claw portion formed on the top plate and the lower plate when the mold (in other words, the container) is closed. By using such a self-locking container, it is possible to suppress the top plate and the lower plate from opening due to an internal pressure of a bladder in a vulcanization step without using a press device or the like.

In the mold container device disclosed in Patent Document 1 and Patent Document 2, when the outer ring is lifted upward, the segment slides downward along an inclined surface of the outer ring. As a result, the segment is displaced outward in a radial direction.

### [Citation List]

### [Patent Documents]

[Patent Document 1]
   JP 2008 126457 A
[Patent Document 2]
   JP 2010 110945 A

US 2012/263813 A1 discloses a mold container device according to the preamble of claim 1. Conversion mechanisms for mold container devices are also known from US 3 989 791 A, SU 1 080 996 and JP 2006 312251 A. [Summary of Invention]

### [Technical Problem]

In the mold container device as in Patent Document 1 and Patent Document 2, a heat source for heating a raw tire is provided in the outer ring. The heat generated from the heat source is transferred from the outer ring to the raw tire via the segment and the tread mold. Therefore, there is a problem that the responsiveness when raising and lowering a temperature of the raw tire is poor.

The segment and the like disposed inside the outer ring in the radial direction removes the tread mold in the radial direction so as not to put a load on the tread when the tread mold is released from a tread. Therefore, the amount of movement of the segment in the radial direction increases, and it becomes difficult to dispose the heat source that requires wiring or piping.

The present invention has been made in view of the above circumstances, and an object of the present invention is to provide a mold container device and a tire vulcanizer capable of improving the responsiveness when raising and lowering a temperature and suppressing a load on the tread of a vulcanized tire.

### [Solution to Problem]

According to the first aspect of the present invention, the mold container device includes a plurality of segments, an outer ring, and a conversion mechanism. The plurality of segments have a heat source. The segments are disposed side by side in a ring shape about an axis, and have an outer surface inclined in a radial direction about an axis in an axial direction in which the axis extends. The outer ring is formed in a ring shape about the axis. The outer ring has an inner peripheral surface having an inclined surface slidable with respect to the outer surface of the plurality of segments and is displaceable in the axial direction. The conversion mechanism connects the outer ring and the segment. The conversion mechanism moves the segment in the radial direction between a first position in which the segment is closed and a second position outside the first position in the radial direction, according to displacement of the outer ring in the axial direction. Further, the conversion mechanism swings one of a lower edge portion and an upper edge portion of the segment in the radial direction about a swinging shaft provided on the other of the lower edge portion and the upper edge portion of the segment disposed in the second position, according to displacement of the outer ring in the axial direction.

In the first aspect, according to displacement of the outer ring in the axial direction, the segment is moved in a radial direction between the first position and the second position by the conversion mechanism. Therefore, when taking out the vulcanized tire, the tread mold can be detached outward in the radial direction with respect to the tread. As a result, since the tread mold can be removed straight with respect to the tread, it is possible to suppress the tread of the vulcanized tire from being deformed and loaded by removing the tread mold diagonally.

In addition, in the first aspect, the segment swings at the second position by the conversion mechanism. Therefore, the other of the lower edge portion and the upper edge portion of the segment can be swung to open widely, so that the raw tire and the vulcanized tire can be easily conveyed in and out.

Further, in the first aspect, the amount of displacement in the radial direction at one of the lower edge portion and the upper edge portion, which are a swing center of the segment, is reduced. Therefore, the heat source can be provided in the segment by wiring or piping on one of the lower edge portion and the upper edge portion of the segment. Accordingly, the responsiveness when raising and lowering the temperature can be improved.

According to the second aspect of the present invention, the conversion mechanism according to the first aspect may include a guide mechanism and a link member. The guide mechanism guides the outer surface of the segment so as to slide between the first position and the second position with respect to the inner peripheral surface of the outer ring. The link member is connected to each of the segment and the outer ring to be swingable around a swinging shaft extending in a tangential direction of an arc about the axis.

In the second aspect, since the link member and the guide mechanism are provided, the outer surface of the segment slides along the inner peripheral surface of the outer ring between the first position and the second position by the guide mechanism, according to displacement of the outer ring in the axial direction, so that the segment can be moved outward in the radial direction. Then, when the segment reaches the second position and the guide by the guide mechanism is released, the segment and the outer ring are separated from each other, and the outer ring pulls the segment via the link member. Accordingly, the segment that has reached the second position can be swung around the swinging axis.

According to the third aspect of the present invention, the conversion mechanism according to the first aspect may include a guide mechanism, a link mechanism, and a sliding portion. The guide mechanism guides the outer surface of the segment so as to slide between the first position and the second position with respect to the inner peripheral surface of the outer ring. The link mechanism has a first link member and a second link member. The first link member and the second link member are connected to each of the segment and the outer ring to be swingable around a swinging shaft extending in a tangential direction of an arc about the axis. The sliding portion is provided in the outer ring and moves one of end portions of end portions on a side close to the outer ring of the first link member and the second link member in a direction of approaching and separating from the other end portion, according to displacement of the outer ring in the axial direction.

In the third aspect, between the first position and the second position, the outer surface of the segment slides along the inner peripheral surface of the outer ring with respect to the inner peripheral surface of the outer ring by the guide mechanism, according to displacement of the outer ring in the axial direction, so that the segment can be moved in the radial direction. When the segment reaches the second position, the sliding portion moves one of end portions of end portions on a side close to an outer ring of the first link member and the second link member in a direction of approaching and separating from the other end portion, according to displacement of the outer ring in the axial direction. Therefore, an angle formed by the first link member and the second link member changes. This angle change causes the segment to swing. Accordingly, the segment can be swung without providing a swinging shaft.

According to the fourth aspect of the present invention, the mold container device according to the third aspect may include an elastic member for urging the sliding portion in a direction for separating the one end portion from the other end portion.

With this configuration, for example, when returning the segment from the swinging state to the second position, the end portion can be smoothly separated from the other end portion.

According to the fifth aspect of the present invention, the tire vulcanizer includes a base portion for supporting the mold container device according to any one of the first to fourth aspects, and a lifting and lowering device for lifting and lowering the outer ring.

With such a configuration, the responsiveness when raising and lowering the temperature is improved, and it is possible to suppress the variation in the quality of the vulcanized tire, so that the commercial value of the tire vulcanizer can be improved.

### [Advantageous Effects of Invention]

According to the mold container device and the tire vulcanizer, it is possible to improve the responsiveness when raising and lowering the temperature and suppress the load on the tread of the vulcanized tire.

### [Brief Description of Drawings]

Fig. 1 is a partially enlarged view of a tire vulcanizer according to the first embodiment of the present invention.
Fig. 2 is a cross-sectional view of a guide mechanism according to the first embodiment of the present invention.
Fig. 3 is a cross-sectional view immediately after an outer ring of the mold container device is moved downward and a guide member is moved out of a groove.
Fig. 4 is a view showing a state in which an outer ring is further moved downward from the state of Fig. 3.
Fig. 5 is a view showing a state in which an outer ring is further moved downward from the state of Fig. 4.
Fig. 6 is a view showing a state in which the mold container device is in an open position.
Fig. 7 is a view showing a state in which an outer ring is moved upward from a state in which the mold container device is in an open position.
Fig. 8 is a cross-sectional view corresponding to Fig. 2 in a modified example of the first embodiment of the present invention.
Fig. 9 is a cross-sectional view corresponding to Fig. 1 in the second embodiment of the present invention.
Fig. 10 is a cross-sectional view showing a state in which an outer ring of the mold container device is being moved downward.
Fig. 11 is a diagram showing a state in which an outer ring is further moved downward from the state of Fig. 10.
Fig. 12 is a diagram showing a state in which an outer ring is further moved downward from the state of Fig. 11.

### [Description of Embodiments]

### (First Embodiment)

Hereinafter, a mold container device and a tire vulcanizer according to the first embodiment of the present invention will be described.

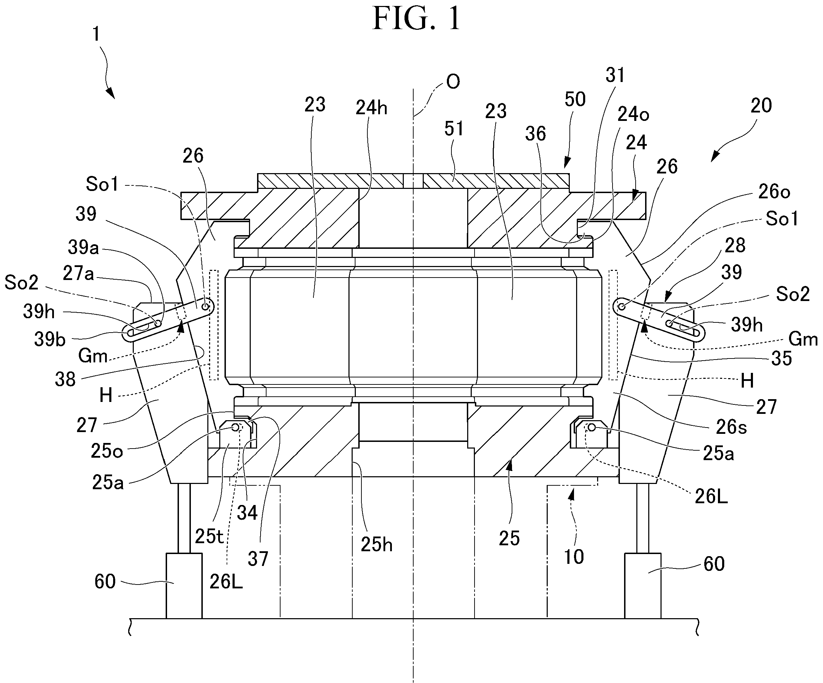

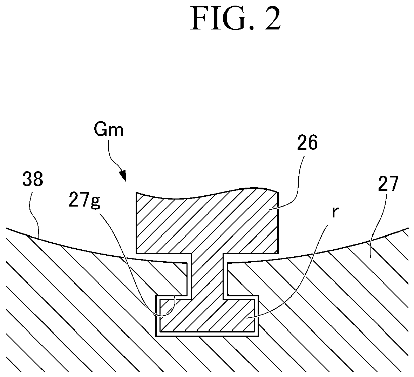

Fig. 1 is a partially enlarged view of the tire vulcanizer according to the first embodiment of the present invention. Fig. 2 is a cross-sectional view of the guide mechanism according to the first embodiment of the present invention.

As shown in Fig. 1, a tire vulcanizer 1 includes a base portion 10, a mold container device 20, and a lifting and lowering device 50. The tire vulcanizer 1 vulcanizes and forms an unvulcanized tire (hereinafter, simply referred to as a raw tire; not shown). The tire vulcanizer 1 in the first embodiment performs a vulcanization forming step of the raw tire in a posture in which an axis O of the raw tire faces in an up-down direction.

The base portion 10 supports the mold container device 20 from below. The base portion 10 is provided with a fixing mechanism (not shown) for fixing the mold container device 20 and a center mechanism (not shown) having a bladder (not shown) for introducing a pressurized heating medium into the inside of the raw tire.

The mold container device 20 includes an upper sidewall mold (not shown), a lower sidewall mold (not shown), and a plurality of tread molds 23, each of which constitutes a mold. The mold container device 20 further includes an upper plate 24, a lower plate 25, a plurality of segments 26, an outer ring 27, and a conversion mechanism 28.

The upper sidewall mold forms a sidewall disposed on an upper side of sidewalls of a raw tire disposed in a posture in which the axis O extends in the up-down direction. The lower sidewall mold forms a sidewall disposed on the lower side among the sidewalls of the raw tire. The plurality of tread molds 23 form a tread portion disposed on an outer peripheral portion of the raw tire. The tread molds 23 are disposed side by side in a circumferential direction about the axis O.

The upper plate 24 holds the upper sidewall mold from above. The upper plate 24 in the first embodiment has a circular outline when viewed from above and is formed in a flat plate shape having a circular hole 24h in a center. The above-described upper sidewall mold is fixed and integrated with the upper plate 24.

The upper plate 24 has a circular outer peripheral surface 24o disposed so as to protrude downward. The outer peripheral surface 24o is formed with an upper recess portion 31 that is recessed toward the inside in the radial direction (hereinafter, simply referred to as a radial direction Dr) about the axis O. The upper recess portion 31 in the first embodiment is continuously formed on the entire circumference of the outer peripheral surface 24o.

The lower plate 25 holds the lower sidewall mold from below. The lower plate 25 in the first embodiment has a circular outline when viewed from below and is formed in a flat plate shape having a circular hole 25h in a center. The lower sidewall mold described above is fixed and integrated with the lower plate 25.

The lower plate 25 has an outer peripheral surface 25o disposed so as to protrude upward. A lower recess portion 34 that is recessed toward the inside in the radial direction Dr is formed on the outer peripheral surface 25o. The lower recess portion 34 in the first embodiment is continuously formed on the entire circumference of the outer peripheral surface 25o.

The plurality of segments 26 are disposed side by side in the circumferential direction about the axis O and hold the plurality of tread molds 23 from the outside in the radial direction Dr. The plurality of segments 26 can be displaced from the first position where the mold is closed to the position where the mold is opened. In the plurality of segments 26 according to the first embodiment, segments 26 adjacent in the circumferential direction approach each other when the segments 26 are in the first position. Therefore, the tread molds 23 adjacent in the circumferential direction come into contact with each other, and the inner peripheral surfaces of all the tread molds 23 are continuous.

On the other hand, when the plurality of segments 26 are opened from the first position, the plurality of segments are disposed outward from the first position in the radial direction Dr, and a gap expands between the segments 26 adjacent in the circumferential direction. The outer surface 35 of the radial direction Dr of the plurality of segments 26 is inclined in the radial direction Dr in the direction of the axis O. More specifically, the outer surface (inclined surface) 35 of the plurality of segments 26 in the first embodiment is inclined at a constant angle so as to increase in diameter toward the upper side.

Each of the plurality of segments 26 includes an upper engaging portion 36 and a lower engaging portion 37. The upper engaging portion 36 engages with the upper plate 24 (more specifically, the upper recess portion 31) when the segment 26 is closed from the open state. The lower engaging portion 37 described in the first embodiment engages with the lower plate 25 (more specifically, the lower recess portion 34 of a lower disc portion 33) when the segment 26 is closed from the open state.

Each of the upper engaging portion 36 and the lower engaging portion 37 in the first embodiment protrudes inward from an upper end portion and a lower end portion of the segment 26 in the radial direction Dr. These upper engaging portions 36 can be inserted and removed from the outside of the radial direction Dr with respect to the upper recess portion 31. When the upper engaging portion 36 is inserted into the upper recess portion 31, the displacement in the up-down direction of the upper plate 24 with respect to the segment 26 is restricted. On the other hand, the upper engaging portion 36 can be displaced outward in the radial direction Dr with respect to the upper recess portion 31.

The lower engaging portion 37 can be inserted and removed from the lower recess portion 34, and when the lower engaging portion 37 is inserted into the lower recess portion 34, the displacement in the up-down direction of the lower plate 25 with respect to the segment 26 is restricted.

The lower engaging portion 37 described in the first embodiment is formed with an elongated hole 26L extending in the radial direction Dr when the segment 26 is disposed at the first position.

Here, the lower plate 25 described above is formed with a support convex portion 25t that supports the segment 26 to be swingable. The support convex portion 25t has a flat surface that protrudes upward from an upper surface 32u of the lower plate 25 and extends in the radial direction Dr. The support convex portion 25t is provided for each of the plurality of segments 26.

The support convex portion 25t has a swinging shaft 25a extending in the tangential direction of a virtual arc about the axis O. In other words, the swinging shaft 25a extends so as to be orthogonal to a flat surface of the support convex portion 25t. The swinging shaft 25a is inserted into the elongated hole 26L of the segment 26 so that the swinging shaft 25a can be displaced in a longitudinal direction of the elongated hole 26L inside the elongated hole 26L. In addition, the swinging shaft 25a is slightly slidable in a circumferential direction (more specifically, the tangential direction) along the swinging shaft 25a inside the elongated hole 26L with the displacement of the segment 26 in the radial direction Dr.

The outer ring 27 is formed in a ring shape about the axis O. The outer ring 27 has an inner peripheral surface 38 that is inclined so as to increase in diameter toward the upper side. The inner peripheral surface 38 disposed so as to be slidable up and down with respect to an outer surface 26o in the radial direction Dr (in other words, the outer surface 35) of the segment 26.

The conversion mechanism 28 includes a guide mechanism Gm and a link member 39.

As shown in Fig. 2, the guide mechanism Gm is configured with a groove 27g and a guide member r. The groove 27g of the guide mechanism Gm of the first embodiment is formed on the inner peripheral surface 38 of the outer ring 27 and has a T-shaped cross section extending up and down. The groove 27g is open to the upper surface 27a of the outer ring 27.

The guide member r of the guide mechanism Gm is formed on the outer surface 26o of the segment 26. The guide member r is disposed inside the groove 27g and is guided by the groove 27g so that the guide member r can slide up and down. In addition, when the guide member r is disposed inside the groove 27g, the guide mechanism Gm in the first embodiment restricts the outer surface 35 of the segment 26 and the inner peripheral surface 38 of the outer ring 27 from being separated in the radial direction Dr. Further, when the guide member r comes out of the groove 27g from the opening of the groove 27g, the guide mechanism Gm is released from the state of restricting the outer surface 35 and the inner peripheral surface 38 from being separated in the radial direction Dr.

The guide mechanism Gm in which the groove 27g and the guide member r are combined has been described as an example, but any mechanism may be used as long as it has the same function as the guide mechanism Gm described above. In addition, the groove 27g may be provided in the segment 26, and the guide member r may be provided in the outer ring 27.

Each of the link members 39 is connected to the segment 26 and the outer ring 27 so as to be swingable around swinging shafts (swinging axis) So1 and So2 extending in the tangential direction of the arc about the axis O, that is, a direction orthogonal to a side surface 26s of the segment 26 in the circumferential direction.

Each of the link members 39 in the first embodiment is formed in a flat plate shape parallel to the side surface 26s of the segment 26. The link member 39 has an elongated hole 39h for accommodating the swinging shaft So2. The elongated hole 39h extends in a longitudinal direction of the link member 39. Here, the swinging shaft So1 provided in the segment 26 described above is disposed slightly above the swinging shaft So2 of the outer ring 27 when the mold container device 20 is closed. As a result, the link member 39 is inclined so as to be disposed upward from the outside to the inside of the radial direction Dr when the mold container device 20 is closed.

An electric heater H is provided in the segment 26 described above. An electric wiring of the electric heater H is drawn out from a position near the swinging shaft So2 described above, that is, from a lower part of the segment 26 to the outside of the segment 26.

The lifting and lowering device 50 includes a bolster plate 51. The lifting and lowering device 50 is configured to be able to lift and lower the upper plate 24 and the upper sidewall mold. The lifting and lowering device 50 includes a coupling mechanism (not shown) capable of coupling the bolster plate 51 and the upper plate 24, a gripping device for gripping a vulcanized tire (not shown), and two hydraulic cylinders (not shown) for lifting and lowering the bolster plate 51. The two hydraulic cylinders (not shown) are disposed symmetrically about the axis O with the mold container device 20 sandwiched between them.

The bolster plate 51 is disposed in the vertical direction above the upper plate 24. The bolster plate 51 is formed so as to extend in a direction perpendicular to the axis O. The bolster plate 51 in the first embodiment is disposed over the upper end portions of two hydraulic cylinders (not shown). The bolster plate 51 is lifted and lowered between an open position at which the mold container device 20 is opened and a closed position at which the mold container device 20 is closed by the hydraulic cylinder (not shown) described above in a state in which the bolster plate 51 is coupled to the upper plate 24.

The mold container device 20 and the tire vulcanizer 1 of the first embodiment have the above-described configurations. Next, the operation of the mold container device 20 and the tire vulcanizer 1 will be described. In the description of this operation, an opening operation when the vulcanized tire is conveyed out of the mold container device 20 and a closing operation when the raw tire is accommodated in the mold container device 20 will be described.

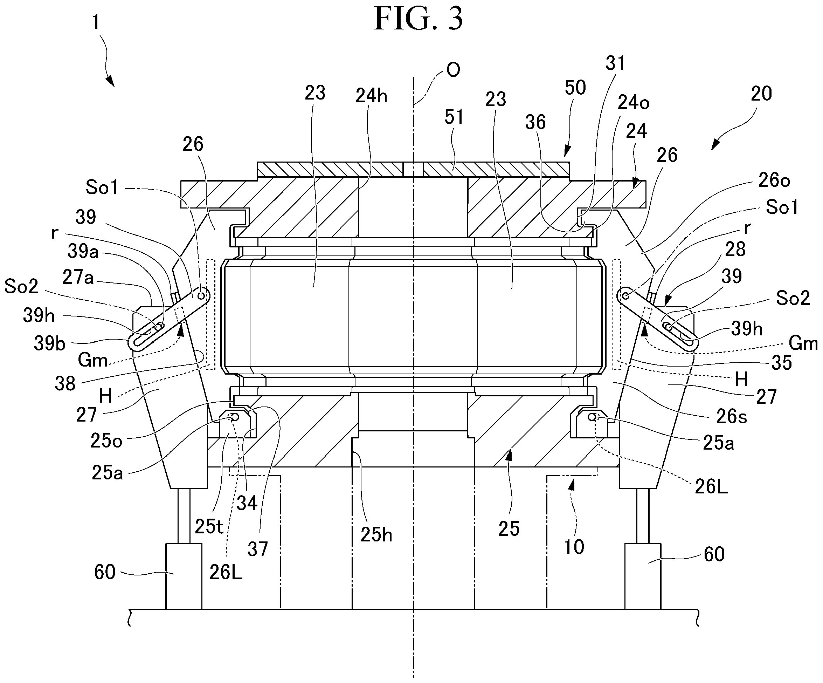

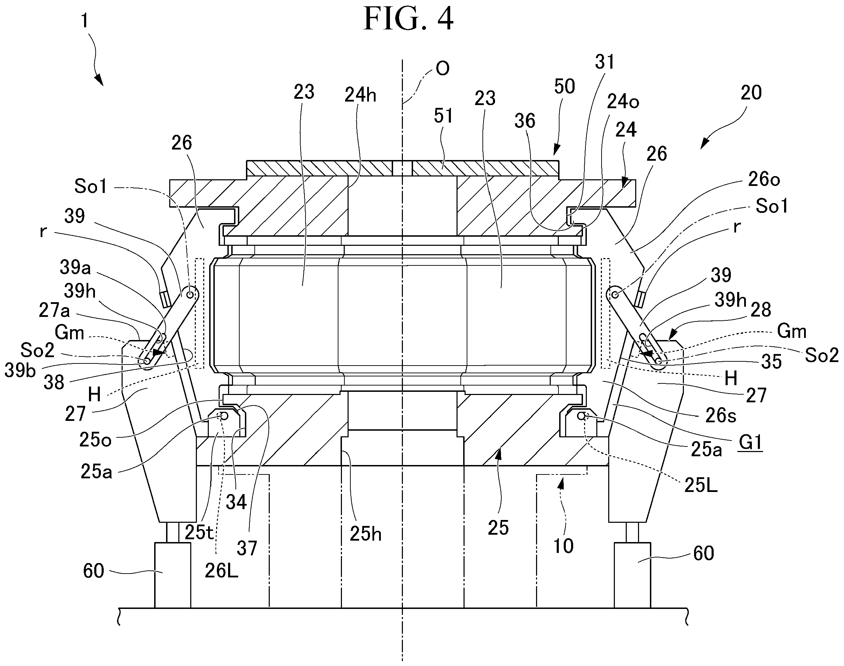

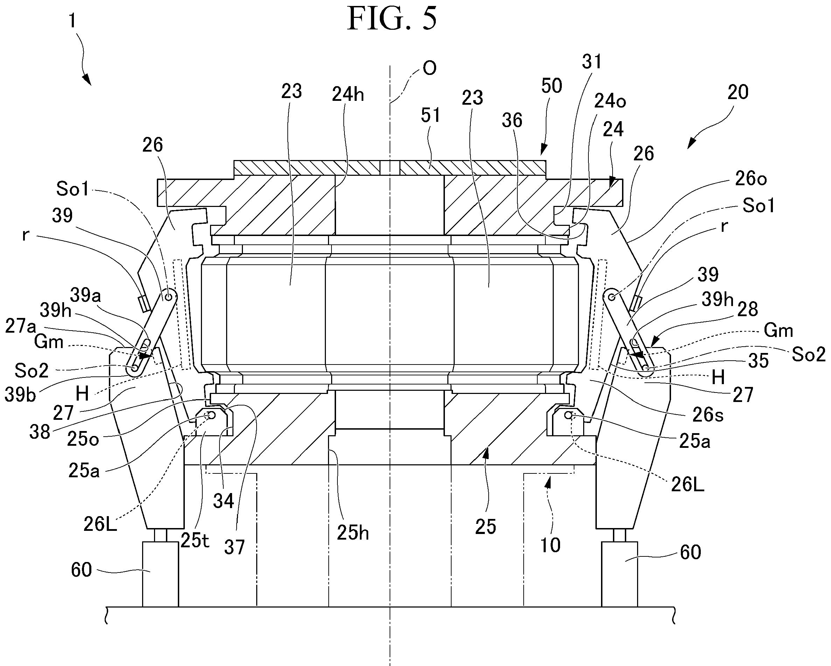

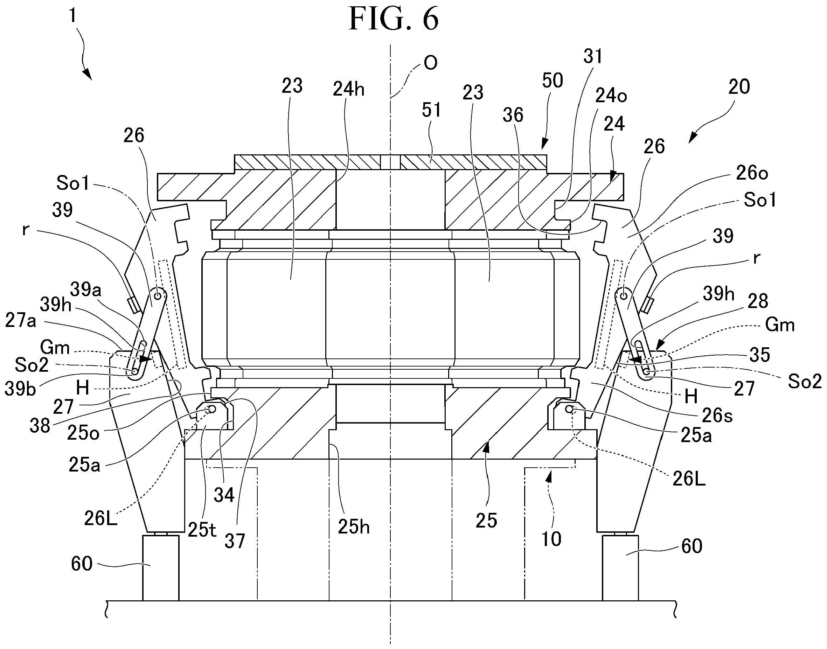

Fig. 3 is a cross-sectional view immediately after an outer ring of the mold container device is moved downward and a guide member is moved out of a groove. Fig. 4 is a view showing a state in which an outer ring is further moved downward from the state of Fig. 3. Fig. 5 is a view showing a state in which an outer ring is further moved downward from the state of Fig. 4. Fig. 6 is a view showing a state in which the mold container device is in an open position.

### (Opening Operation)

As shown in Fig. 1, the raw tire is accommodated in the mold container device 20 and the vulcanization step is performed. After that, the mold container device 20 is opened in order to take out the vulcanized tire from the mold container device 20. In order to open the mold container device 20, the outer ring 27 is lowered by the lifting and lowering device 60 such as a hydraulic cylinder provided in the tire vulcanizer 1.

In order to open the mold container device 20, the outer ring 27 is moved from a position where the mold container device 20 is closed (refer to Fig. 1) to a position where the guide member r separates from the groove 27g (refer to Fig. 3). As a result, the segment 26 moves from the first position (refer to Fig. 1) in which the segment 26 is closed to the second position (refer to Fig. 3) outside the first position in the radial direction Dr.

Specifically, the outer surface 35 of the segment 26 slides down on the inner peripheral surface 38 of the outer ring 27. In other words, the segment 26 moves outward in the radial direction Dr along the outer surface 35 by moving upward with respect to the outer ring 27. In other words, the segment 26 moves in a horizontal direction perpendicular to a tread surface of the vulcanized tire. At this time, the swinging shaft 25a of the support convex portion 25t moves in the radial direction Dr in the elongated hole 26L of the segment 26. For convenience of the figs, in Fig. 3, a tread mold 23 is not displaced with the movement of the segment 26 from the first position to the second position, but actually, the tread mold 23 is also displaced with the displacement of the segment 26 (the same applies to the second embodiment).

After that, as shown in Fig. 4, when the outer ring 27 is further moved downward, the segment 26 is not displaced, and the swinging shaft So2 of the outer ring 27 is slidably displaced from the first end portion 39a to the second end portion 39b in the elongated hole 39h of the link member 39. At this time, the outer ring 27 is separated from the segment 26, and a gap G1 is formed between the outer ring 27 and the segment 26. A posture of the link member 39 gradually changes so as to extend in the up-down direction.

As shown in Fig. 5, when the outer ring 27 is further moved downward, the segment 26 is pulled by the outer ring 27 via the link member 39 and starts swinging. Specifically, in the segment 26, an upper edge portion of the segment 26 is displaced outward in the radial direction Dr about the swinging shaft 25a. Then, when the segment 26 reaches a position where the vulcanized tire can be conveyed out, the downward displacement of the outer ring 27 is stopped, and the displacement of the segment 26 is also stopped accordingly. After that, the upper plate 24 and the upper sidewall mold (not shown) rise together with the bolster plate 51, and the mold container device 20 is opened. In the first embodiment, the case where the vulcanized tire is taken out from the mold container device 20 has been described as an example, but the same applies to the case where the empty mold container device 20 is opened to convey the raw tire.

### (Closing Operation)

For example, when the conveyance of the raw tire into the mold container device 20 in the open position is completed, the mold container device 20 is closed.

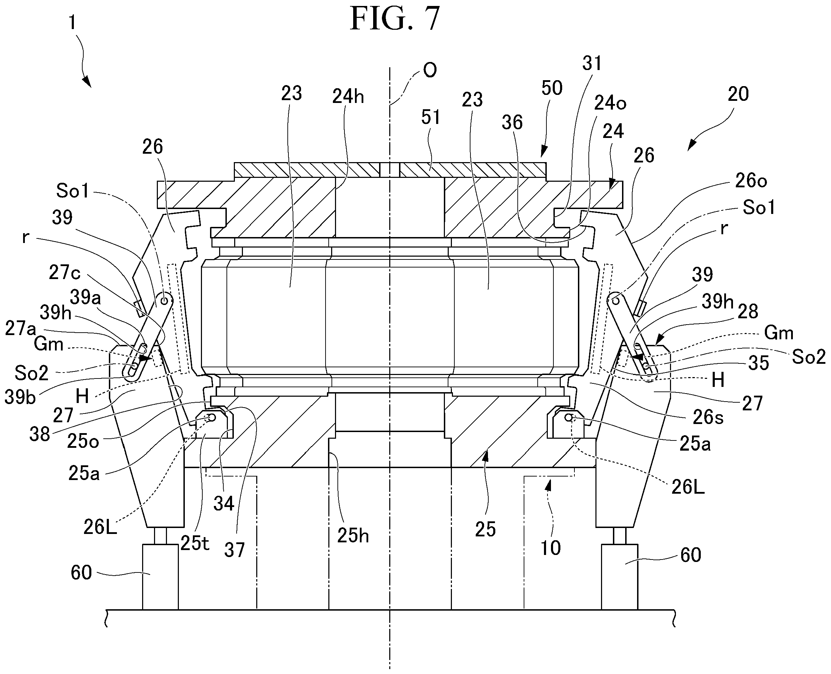

Fig. 7 is a view showing a state in which an outer ring is moved upward from a state in which the mold container device is in an open position.

First, after the raw tire is conveyed, the bolster plate 51 is lowered. When the outer ring 27 is raised from the open position shown in Fig. 6 by the lifting and lowering device 60, the gap between the outer ring 27 and the segment 26 is reduced, and as shown in Fig. 7, a corner portion 27c on the inner peripheral side of the outer ring 27 and the outer surface 35 of the segment 26 come into contact with each other. At this time, the swinging shaft So2 is slidably displaced from the second end portion 39b toward the first end portion 39a in the elongated hole 39h of the link member 39.

After that, when the outer ring 27 is further raised, a force that is pushed upward by the corner portion 27c of the outer ring 27 acts on the segment 26. As a result, the upper edge portion of the segment 26 is displaced inward in the radial direction Dr about the swinging shaft 25a. Then, the segment 26 reaches the second position shown in Fig. 3. When the outer ring 27 is further raised from the state where the segment 26 is disposed at the second position, the guide member r enters the groove 27g. As a result, a state in which the inner peripheral surface 38 of the segment 26 is parallel to the outer surface 35 of the outer ring 27 is maintained. Then, due to the further rise of the outer ring 27, the segment 26 horizontally moves inward in the radial direction Dr from the second position to the first position in a direction opposite to the displacement of the segment 26 from Fig. 1 to Fig. 3 described above. As a result, the mold container device 20 is in a self-locked state, and the vulcanization step is started.

### (Action and Effect of First Embodiment)

In the first embodiment described above, the outer ring 27 has the inner peripheral surface 38 that is inclined so as to increase in diameter toward the upper side. Therefore, the tire vulcanizer 1 does not need a strong frame for lifting the outer ring 27, the segment 26, and the upper plate 24, which are heavy objects.

Further, in the first embodiment, according to displacement of the outer ring 27 in the direction of the axis O, the segment 26 is moved in the radial direction Dr between the first position and second position by the conversion mechanism 28. Therefore, when taking out the vulcanized tire, the tread mold can be detached outward in the radial direction Dr with respect to the tread. Therefore, the tread mold can be removed straight with respect to the tread, and the tread can be suppressed from being deformed by removing the tread mold diagonally. As a result, it is advantageous in that the blade formed in the tread mold can be smoothly released, especially in a case of a studless tire in which a fine sipe is formed on the tread.

Further, in the first embodiment, the segment 26 swings at the second position by the conversion mechanism 28. Therefore, the upper edge portion of the segment 26 can be swung to open widely, so that the raw tire and the vulcanized tire can be easily conveyed in and out.

Further, in the first embodiment, the amount of displacement in the radial direction Dr at the lower edge portion which is a swing center of the segment 26 is reduced. Therefore, the electric heater H can be provided in the segment 26 by wiring or piping at the lower edge portion of the segment 26. Accordingly, the responsiveness when raising and lowering the temperature can be improved.

In the first embodiment, since the link member 39 and the guide mechanism Gm are included, the outer surface 35 of the segment 26 slides along the inner peripheral surface 38 of the outer ring between the first position and the second position by the guide mechanism Gm, according to displacement of the outer ring 27 in the direction of the axis O. Therefore, the segment 26 can be moved outward in the radial direction Dr. Then, when the segment 26 reaches the second position and the guide by the guide mechanism Gm is released, the segment 26 and the outer ring 27 are separated from each other, and the outer ring 27 pulls the segment 26 via the link member 39. Accordingly, the segment 26 that has reached the second position can be swung around the swinging shaft 25a.

In the first embodiment, the tire vulcanizer 1 includes the base portion 10 for supporting the mold container device 20 having the above-described configuration, and the lifting and lowering device 60 for lifting and lowering the outer ring 27. In the mold container device 20, since the responsiveness when raising and lowering the temperature is improved, it is possible to suppress the variation in the quality of the vulcanized tire. Therefore, the commercial value of the tire vulcanizer 1 can be improved.

### (Modified Example of First Embodiment)

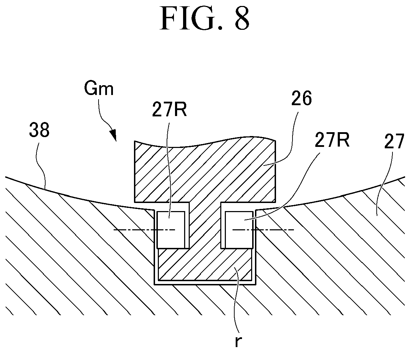

Fig. 8 is a cross-sectional view corresponding to Fig. 2 in a modified example of the first embodiment of the present invention.

In the first embodiment, the case where the guide mechanism Gm includes the guide member r and the groove 27g has been described. However, the guide mechanism Gm may include, for example, a roller 27R formed like a cam follower.

By including the roller 27R in this way, the guide member r can be smoothly inserted into the groove 27g. In addition, it is possible to reduce the sliding resistance generated when the guide member r slides inside the groove 27g. Therefore, the mold container device 20 can be opened and closed more smoothly and with less force.

### (Second Embodiment)

Next, the second embodiment of the present invention will be described with reference to the drawings. The second embodiment differs from the first embodiment described above only in that the support structure of the segment and the configuration of the conversion mechanism are different. Therefore, the same parts as those in the first embodiment are designated by the same reference numerals, and duplicate description will be omitted.

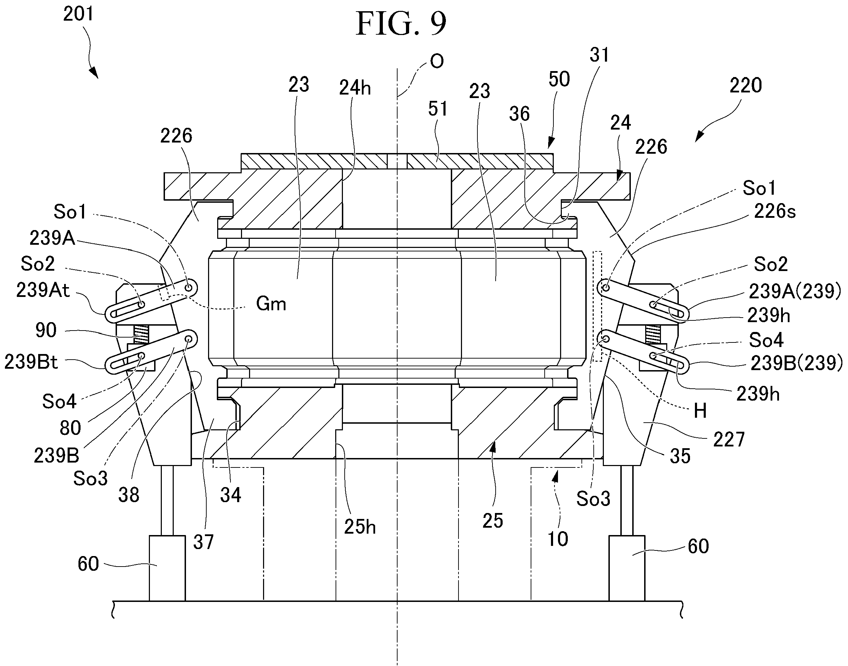

Fig. 9 is a cross-sectional view corresponding to Fig. 1 in the second embodiment of the present invention.

As shown in Fig. 9, a tire vulcanizer 201 according to the second embodiment includes the base portion 10, a mold container device 220, and the lifting and lowering device 50. The mold container device 220 includes the upper sidewall mold (not shown), the lower sidewall mold (not shown), and the plurality of tread molds 23, each of which constitutes a mold. The mold container device 220 further includes the upper plate 24, the lower plate 25, a plurality of segments 226, an outer ring 227, and a conversion mechanism 228.

The plurality of segments 226 are disposed side by side in the circumferential direction about the axis O, and hold the plurality of tread molds 23 from the outside in the radial direction Dr. The plurality of segments 226 can be displaced from the first position where the mold is closed to the position where the mold is opened. When the plurality of segments 226 in the first embodiment are in the first position, the segments 226 adjacent to each other in the circumferential direction come into contact with each other. As a result, the tread molds 23 adjacent to each other in the circumferential direction also come into contact with each other, and the inner peripheral surfaces of all the tread molds 23 are continuous.

On the other hand, when the plurality of segments 26 are opened from the first position, the plurality of segments 226 are disposed outward from the first position in the radial direction Dr. At this time, in the plurality of segments 226, a gap is formed between the segments 226 adjacent to each other in the circumferential direction. The outer surface 35 of the radial direction Dr of the plurality of segments 226 is inclined in the radial direction Dr in the direction of the axis O. More specifically, the outer surface 35 of the plurality of segments 26 in the first embodiment is inclined at a constant angle so as to increase in diameter toward the upper side.

The plurality of segments 226 in the second embodiment do not include the elongated holes 26L included in the plurality of segments 26 in the first embodiment.

The conversion mechanism 228 includes the guide mechanism Gm, a link mechanism 239, a sliding portion 80, and an elastic member 90.

The link mechanism 239 has the first link member 239A and the second link member 239B.

The first link member 239A is connected to the segment 226 and the outer ring 227 to be swingable. The first link member 239A can swing around the swinging axes So1 and So2. The swinging axes So1 and So2 extend in the tangential direction of the arc about the axis O, in other words, in the circumferential direction in the direction orthogonal to a side surface 226s of the segment 226. The first link member 239A described in the second embodiment and the link member 39 of the first embodiment described above are formed in the same flat plate shape.

The second link member 239B has the same shape as the first link member 239A. The second link member 239B is disposed in a parallel posture below the first link member 239A when the mold container device 220 is in the closed state (refer to Fig. 9). The second link member 239B can swing around the swinging axes So3 and So4 parallel to each of the swinging axes So1 and So2. The second link member 239B is supported by the sliding portion 80 of the outer ring 227 to be swingable.

The sliding portion 80 moves an end portion 239Bt on the side close to the outer ring 227 of the second link member 239B in a direction of approaching and separating from an end portion 239At on the side close to the outer ring 227 of the first link member 239A, according to the displacement of the outer ring 227 in the direction of the axis O.

The elastic member 90 urges the sliding portion 80 in a direction in which the end portion 239Bt of the second link member 239B is separated from the end portion 239At of the first link member 239A. The elastic member 90 described in the second embodiment is a coil spring. The elastic member 90 elastically deforms in a compression direction when a force exceeding the elastic force is applied. The elastic member 90 is not limited to the coil spring. The elastic member 90 may have any structure as long as it can urge the sliding portion 80.

The mold container device 220 and the tire vulcanizer 201 of the second embodiment have the above-described configurations. Next, the operation of the mold container device 220 and the tire vulcanizer 201 will be described. In the description of this operation, an opening operation when the vulcanized tire is conveyed out of the mold container device 220 and a closing operation when the raw tire is accommodated in the mold container device 20 will be described.

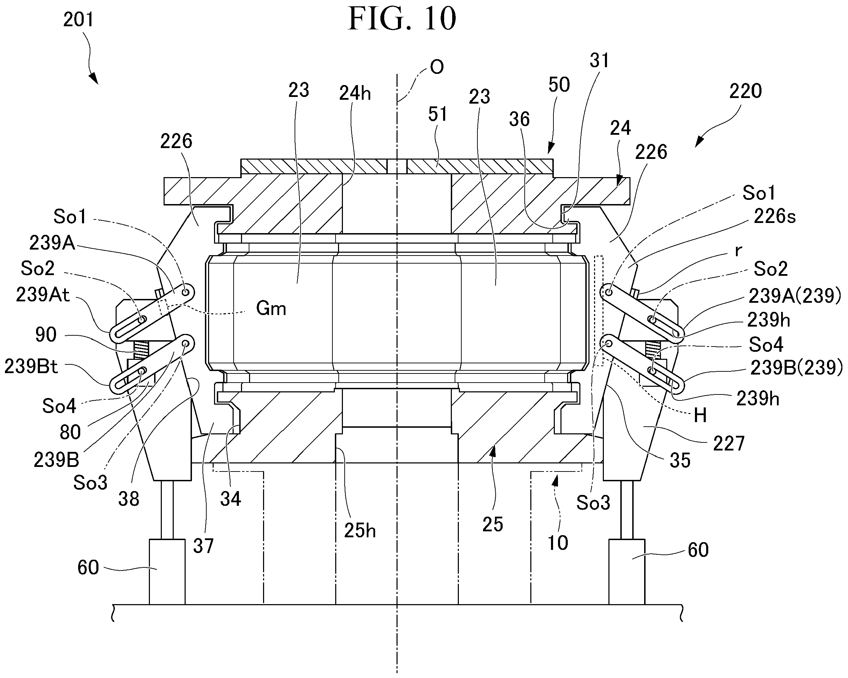

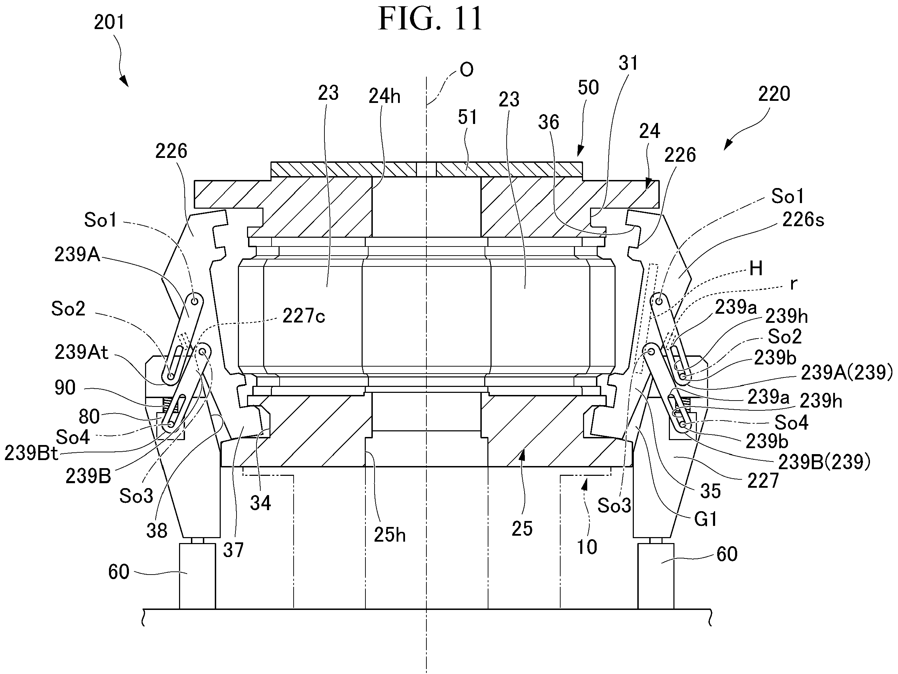

Fig. 10 is a cross-sectional view showing a state in which an outer ring of the mold container device is being moved downward. Fig. 11 is a diagram showing a state in which an outer ring is further moved downward from the state of Fig. 10.

### (Opening Operation)

As shown in Fig. 9, the raw tire is accommodated in the mold container device 220 and the vulcanization step is performed. After that, the mold container device 220 is opened in order to take out the vulcanized tire from the mold container device 220. In order to open the mold container device 220, the outer ring 27 is lowered by the lifting and lowering device 60 such as a hydraulic cylinder provided in the tire vulcanizer 201.

In order to open the mold container device 220, the outer ring 227 is moved from a position where the mold container device 220 is closed (refer to Fig. 9) to a position where the guide member r separates from the groove 227g (refer to Fig. 10). As a result, the segment 226 moves from the first position (refer to Fig. 9) in which the segment 226 is closed to the second position (refer to Fig. 10) outside the first position in the radial direction Dr.

Specifically, the outer surface 35 of the segment 226 slides down on the inner peripheral surface 38 of the outer ring 227. In other words, the segment 226 moves outward in the radial direction Dr along the outer surface 35 by moving upward with respect to the outer ring 227. In other words, the segment 226 moves in a horizontal direction perpendicular to the tread surface of the vulcanized tire.

After that, when the outer ring 227 is further moved downward, the segment 226 is not displaced, and the swinging axes (swinging shafts) So2 and So4 of the outer ring 227 are slidably displaced from the first end portion 239a to the second end portion 239b in the elongated hole 239h of the first link member 239A and the second link member 239B. At this time, the outer ring 227 is separated from the segment 226, and the gap G1 is formed between the outer ring 227 and the segment 226. Each of the first link member 239A and the second link member 239B gradually change the postures to extend in the up-down direction.

When the outer ring 227 is further moved downward, as shown in Fig. 11, the sliding portion 80 is pulled by the second link member 239B, and a force in the compression direction acts on the elastic member 90. The elastic member 90 is gradually compressed and deformed with the downward movement of the outer ring 227. Due to the compressive deformation of the elastic member 90, the second end portion 239b of the first link member 239A and the second end portion 239b of the second link member 239B are displaced in the approaching direction. Then, the posture of the first link member 239A and the posture of the second link member 239B are different (in other words, they are not parallel). As a result, a force of pulling the segment 226 of the first link member 239A is larger than that of the second link member 239B. Then, the segment 226 starts swinging according to a difference in the force of pulling the segment 226.

Specifically, in the segment 226, the lower edge portion of the segment 226 is set as a swing center, and the upper edge portion of the segment 226 is displaced outward in the radial direction Dr. Then, when the segment 226 reaches a position where the vulcanized tire can be conveyed out, the downward displacement of the outer ring 227 is stopped, and the displacement of the segment 226 is also stopped. After that, the upper plate 24 and the upper sidewall mold (not shown) rise together with the bolster plate 51, and the mold container device 20 is opened. In the second embodiment, the case where the vulcanized tire is taken out from the mold container device 220 has been described as an example, but the same applies to the case where the empty mold container device 220 is opened to convey the raw tire.

### (Closing Operation)

For example, when the conveyance of the raw tire into the mold container device 220 in the open position is completed, the mold container device 220 is closed.

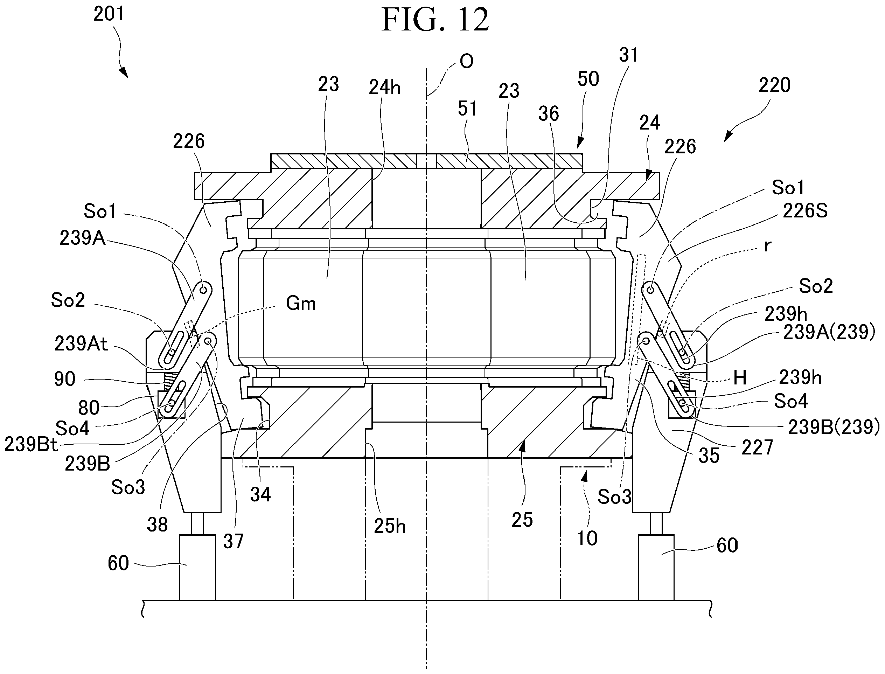

Fig. 12 is a view showing a state in which an outer ring is moved upward from a state in which the mold container device is in an open position.

First, after the raw tire is conveyed, the bolster plate 51 is lowered. Then, the outer ring 27 is raised by the lifting and lowering device 60 from the open position shown in Fig. 11. Here, at the open position shown in Fig. 11, the upper corner portion (not shown) of the inner circumference of the outer ring 27 is in contact with the outer surface 35 of the segment 26. Therefore, by raising the outer ring 227, the force that is pushed upward by the corner portion (not shown) of the outer ring 227 acts on the segment 226. As a result, the upper edge portion of the segment 226 is displaced inward in the radial direction Dr about the lower edge portion of the segment 226.

After that, as the outer ring 227 rises, the force acting on the elastic member 90 in the compression direction gradually decreases. As a result, the sliding portion 80 slides so that the second end portion 239b of the first link member 239A and the second end portion 239b of the second link member 239B are separated from each other. Then, a distance between the second end portion 239b of the first link member 239A and the second end portion 239b of the second link member 239B returns to a distance before the elastic member 90 is compressed. As a result, as shown in Fig. 12, the first link member 239A and the second link member 239B are in a parallel state.

When the outer ring 227 is further raised, as shown in Fig. 12, the swinging axes (swinging shafts) So2 and So4 move from the second end portion 239b to the first end portion 239a side. Then, through the same state as in Fig. 10 described above, the segment 226 reaches the second position, and the guide member r is inserted into the groove 27g. Then, as the outer ring 227 rises, the segment 226 horizontally moves inward in the radial direction Dr to reach the first position shown in Fig. 9. As a result, the mold container device 220 is in a self-locked state as in the first embodiment.

According to the second embodiment, between the first position and the second position, the outer surface 35 of the segment 226 slides along the inner peripheral surface 38 of the outer ring 227 with respect to the inner peripheral surface 38 of the outer ring 227, according to displacement of the outer ring 227 in the direction of the axis O. Therefore, the segment 226 can be moved in the radial direction Dr.

When the segment 226 is displaced from the first position and reaches the second position, the sliding portion 80 moves the end portion 239Bt of the second link member 239B in the direction of approaching and separating from the end portion 239At of the first link member 239A, according to displacement of the outer ring 227 in the direction of the axis O. Therefore, an angle formed by the first link member 239A and the second link member 239B can be changed. By this angle change, the segment 226 can be swung. Accordingly, the segment 226 can be swung without providing the swinging shaft 25a as in the first embodiment.

In the second embodiment, the elastic member 90 is further provided. As a result, for example, when the segment 226 is returned to the second position from the swinging state, the end portion 239At of the first link member 239A on the side close to the outer ring 227 can be smoothly separated from the end portion Bt of the second link member 239B on the side close to the outer ring 227. Accordingly, the posture of the segment 226 can be made the same as the posture of the second position at the time of the opening operation, and the guide member r can be smoothly accommodated in the groove 27g.

The present invention is not limited to the above-described embodiments, and includes various modifications to the above-described embodiments without departing from the invention as defined in the appended claims.

For example, in each of the above-described embodiments, the case where the mold container device 20 is a self-locking container has been described. However, the mold container device 20 is not limited to the self-locking container.

In the second embodiment, the case where the end portion 239Bt of the second link member 239B on the side close to the outer ring 227 is approached and separated from the end portion 239At of the first link member 239A on the side close to the outer ring 227 has been described. However, the end portion 239Bt of the second link member 239B on the side close to the outer ring 227 may be approached and separated from the end portion 239At of the first link member 239A on the side close to the outer ring 227. Further, the case where the sliding portion 80 is displaced by using the elastic force of the elastic member 90 when closing the mold container device 220 has been described, but the sliding portion 80 may be actively displaced by using an actuator or the like.

### [Industrial Applicability]

According to the mold container device and the tire vulcanizer, it is possible to improve the responsiveness when raising and lowering the temperature and suppress the load on the tread of the vulcanized tire.

### [Reference Signs List]

1: Tire vulcanizer
10: Base portion
20, 220: Mold container device
21: Upper sidewall mold
22: Lower sidewall mold
23: Tread mold
24: Upper plate
25: Lower plate
26, 226: Segment
27, 227: Outer ring
27g: Groove
27R: Roller
28, 228: Conversion mechanism
31: Upper recess portion
34: Lower recess portion
35: Inclined surface
36: Upper engaging portion
37: Lower engaging portion
38: Inner peripheral surface
39: Link member
50: Lifting and lowering device
51: Bolster plate
60: Lifting and lowering device
Gm: Guide mechanism
H: Electric heater
r: Guide member

## Claims

1. A mold container device (20,220) comprising:
a plurality of segments (26,226) that are disposed side by side in a ring shape about an axis (O), have an outer surface (26o,35) inclined in a radial direction around the axis in an axial direction in which the axis extends, and have a heat source;
an outer ring (27,127) that is formed in a ring shape around the axis, has an inner peripheral surface (38) having an inclined surface slidable with respect to the outer surface (26o,35) of the plurality of segments (26,226), and is displaceable in the axial direction;
**characterized in**
a conversion mechanism (28,228) that connects the outer ring (27,127) and the segment (26,226), moves the segment in the radial direction between a first position in which the segment is closed and a second position outside the first position in the radial direction, according to displacement of the outer ring (27,127) in the axial direction, and swings one of a lower edge portion and an upper edge portion of the segment (26,226) in the radial direction around a swinging shaft provided on the other of the lower edge portion and the upper edge portion of the segment disposed in the second position, according to displacement of the outer ring in the axial direction.

2. The mold container device according to Claim 1, wherein
the conversion mechanism (38) includes
a guide mechanism (Gm) that guides the outer surface (26o,35) of the segment (26,226) to slide with respect to the inner peripheral surface of the outer ring (27,227) between the first position and the second position, and
a link member (39) that is connected to each of the segment (26,226) and the outer ring (27,227) to be swingable around a swinging shaft extending in a tangential direction of an arc about the axis.

3. The mold container device according to Claim 1, wherein
the conversion mechanism (38) further includes
a guide mechanism (Gm) that guides the outer surface (35) of the segment (226) to slide with respect to the inner peripheral surface of the outer ring (227) between the first position and the second position,
a link mechanism (239) that has a first link member (239A) and a second link member (239B) that are connected to each of the segment and the outer ring to be swingable around a swinging shaft extending in a tangential direction of an arc about the axis, and
a sliding portion (80) that is provided in the outer ring and moves one of end portions of the first link member (239A) and the second link member (239B) on a side close to the outer ring in a direction of approaching and separating from the other end portion, according to displacement of the outer ring in the axial direction.

4. The mold container device according to Claim 3, further comprising:
an elastic member (90) that urges the sliding portion (80) in a direction of separating the one end portion from the other end portion.

5. A tire vulcanizer comprising:
a base portion (10) that supports the mold container device according to any one of Claims 1 to 4; and
a lifting and lowering device (60) that lifts and lowers the outer ring.

## Patentansprüche

1. Formbehältervorrichtung (20, 220), die Folgendes umfasst:
eine Vielzahl von Segmenten (26, 226), die nebeneinander in einer Ringform um eine Achse (0) angeordnet sind, eine Außenfläche (26o, 35) aufweisen, die in einer Radialrichtung um die Achse in einer Axialrichtung, in die sich die Achse erstreckt, geneigt ist, und eine Wärmequelle aufweisen;
einen Außenring (27, 127), der in einer Ringform um die Achse gebildet ist, eine Innenumfangsfläche (38) mit einer geneigten Fläche, die mit Bezug auf die Außenfläche (26o, 35) der Vielzahl von Segmenten (26, 226) gleitbar ist, aufweist und in die Axialrichtung versetzbar ist;
**gekennzeichnet durch**
einen Umwandlungsmechanismus (28, 228), der den Außenring (27, 127) und das Segment (26, 226) verbindet, das Segment zwischen einer ersten Position, in der das Segment geschlossen ist, und einer zweiten Position in der Radialrichtung außerhalb der ersten Position gemäß einem Versatz des Außenrings (27, 127) in die Axialrichtung in die Radialrichtung bewegt und eines von einem Unterkantenabschnitt und einem Oberkantenabschnitt des Segments (26, 226) um eine Schwenkwelle, die am anderen des Unterkantenabschnitts und des Oberkantenabschnitts des Segments, das in der zweiten Position angeordnet ist, bereitgestellt ist, gemäß einem Versatz des Außenrings in die Axialrichtung in die Radialrichtung schwenkt.

2. Formbehältervorrichtung nach Anspruch 1, wobei
der Umwandlungsmechanismus (38) Folgendes beinhaltet
einen Führungsmechanismus (Gm), der die Außenfläche (26o, 35) des Segments (26, 226) derart führt, dass es mit Bezug auf die Innenumfangsfläche des Außenrings (27, 227) zwischen der ersten Position und der zweiten Position gleitet, und
ein Verbindungselement (39), das mit jedem des Segments (26, 226) und des Außenrings (27, 227) verbunden ist, um um eine Schwenkachse schwenkbar zu sein, die sich in eine Tangentialrichtung eines Bogens um die Achse erstreckt.

3. Formbehältervorrichtung nach Anspruch 1, wobei
der Umwandlungsmechanismus (38) ferner Folgendes beinhaltet
einen Führungsmechanismus (Gm), der die Außenfläche (35) des Segments (226) derart führt, dass es mit Bezug auf die Innenumfangsfläche des Außenrings (227) zwischen der ersten Position und der zweiten Position gleitet,
einen Verbindungsmechanismus (239), der ein erstes Verbindungselement (239A) und ein zweites Verbindungselement (239B) aufweist, die mit jedem des Segments und des Außenrings verbunden sind, um um eine Schwenkachse schwenkbar zu sein, die sich in eine Tangentialrichtung eines Bogens um die Achse erstreckt, und
einen Gleitabschnitt (80), der im Außenring bereitgestellt ist und einen von Endabschnitten des ersten Verbindungselements (239A) und des zweiten Verbindungselements (239B) auf einer Seite nahe des Außenrings in eine Richtung des Annäherns an den und des Trennens vom anderen Endabschnitt gemäß einem Versatz des Außenrings in die Axialrichtung bewegt.

4. Formbehältervorrichtung nach Anspruch 3, die ferner Folgendes umfasst:
ein elastisches Element (90) das den Gleitabschnitt (80) in eine Richtung des Trennens des einen Endabschnitts vom anderen Endabschnitt drängt.

5. Reifenvulkanisierer, der Folgendes umfasst:
einen Basisabschnitt (10), der die Formbehältervorrichtung nach einem der Ansprüche 1 bis 4 stützt; und
eine Hebe- und Absenkvorrichtung (60), die den Außenring anhebt und absenkt.

## Revendications

1. Dispositif de récipient de moule (20, 220) comprenant :
une pluralité de segments (26, 226) qui sont disposés côte à côte en forme d'anneau autour d'un axe (0), ont une surface extérieure (26o, 35) inclinée dans une direction radiale autour de l'axe dans une direction axiale dans laquelle l'axe s'étend, et ont une source de chaleur ;
un anneau extérieur (27, 127) qui est formé en forme d'anneau autour de l'axe, a une surface périphérique intérieure (38) ayant une surface inclinée pouvant coulisser par rapport à la surface extérieure (26o, 35) de la pluralité de segments (26, 226), et est déplaçable dans la direction axiale ;
**caractérisé par**
un mécanisme de conversion (28, 228) qui connecte l'anneau extérieur (27, 127) et le segment (26, 226), déplace le segment dans la direction radiale entre une première position dans laquelle le segment est fermé et une deuxième position à l'extérieur de la première position dans la direction radiale, selon un déplacement de l'anneau extérieur (27, 127) dans la direction axiale, et fait pivoter une parmi une partie de bord inférieur et une partie de bord supérieur du segment (26, 226) dans la direction radiale autour d'un arbre de pivotement prévu sur l'autre parmi la partie de bord inférieur et la partie de bord supérieur du segment disposé dans la deuxième position, selon un déplacement de l'anneau extérieur dans la direction axiale.

2. Dispositif de récipient de moule selon la revendication 1, dans lequel
le mécanisme de conversion (38) comporte
un mécanisme de guidage (Gm) qui guide la surface extérieure (26o, 35) du segment (26, 226) pour qu'elle coulisse par rapport à la surface périphérique intérieure de l'anneau extérieur (27, 227) entre la première position et la deuxième position, et
un élément de liaison (39) qui est connecté à chacun parmi le segment (26, 226) et l'anneau extérieur (27, 227) pour pouvoir pivoter autour d'un arbre de pivotement s'étendant dans une direction tangentielle d'un arc autour de l'axe.

3. Dispositif de récipient de moule selon la revendication 1, dans lequel
le mécanisme de conversion (38) comporte en outre
un mécanisme de guidage (Gm) qui guide la surface extérieure (35) du segment (226) pour qu'elle coulisse par rapport à la surface périphérique intérieure de l'anneau extérieur (227) entre la première position et la deuxième position,
un mécanisme de liaison (239) qui a un premier élément de liaison (239A) et un deuxième élément de liaison (239B) qui sont connectés à chacun parmi le segment et l'anneau pour pouvoir pivoter autour d'un arbre de pivotement s'étendant dans une direction tangentielle d'un arc autour de l'axe, et
une partie coulissante (80) qui est prévue dans l'anneau extérieur et déplace une des parties d'extrémité du premier élément de liaison (239A) et du deuxième élément de liaison (239B) sur un côté proche de l'anneau extérieur dans une direction de rapprochement et de séparation de l'autre partie d'extrémité, selon un déplacement de l'anneau extérieur dans la direction axiale.

4. Dispositif de récipient de moule selon la revendication 3, comprenant en outre :
un élément élastique (90) qui sollicite la partie coulissante (80) dans une direction de séparation de la première partie d'extrémité de l'autre partie d'extrémité.

5. Vulcanisateur de pneus comprenant :
une partie de base (10) qui supporte le dispositif de récipient de moule selon l'une quelconque des revendications 1 à 4 ; et
un dispositif de levage et d'abaissement (60) qui relève et abaisse l'anneau extérieur.
